(19) **Europäisches Patentamt**
**European Patent Office**
**Office européen des brevets**

(11) **EP 2 982 062 B1**

(12) **EUROPEAN PATENT SPECIFICATION**

(45) Date of publication and mention
of the grant of the patent:
**18.12.2019 Bulletin 2019/51**

(51) Int Cl.:
***H04B 17/00*** *(2015.01)* ***H04W 52/24*** *(2009.01)*

(21) Application number: **13716992.6**

(86) International application number:
**PCT/EP2013/057189**

(22) Date of filing: **05.04.2013**

(87) International publication number:
**WO 2014/161592 (09.10.2014 Gazette 2014/41)**

(54) **METHOD FOR INTER-CELL INTERFERENCE COORDINATION**

VERFAHREN ZUR INTERFERENZKOORDINIERUNG ZWISCHEN ZELLEN

PROCÉDÉ DE COORDINATION D'INTERFÉRENCES INTERCELLULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.02.2016 Bulletin 2016/06**

(73) Proprietor: **Huawei Technologies Co., Ltd.
Longgang District
Shenzhen, Guangdong 518129 (CN)**

(72) Inventors:
• **WEIJUN, Sun**
  **S-16440 Kista (SE)**
• **SOLDATI, Pablo**
  **S-16440 Kista (SE)**

(74) Representative: **Kreuz, Georg Maria
Huawei Technologies Duesseldorf GmbH
Riesstraße 25
80992 München (DE)**

(56) References cited:
**EP-A2- 2 498 419      WO-A2-2012/105766
WO-A2-2013/009232    CA-A1- 2 812 070
US-A1- 2012 046 028   US-A1- 2012 258 724**

• **ASTELY D ET AL: "LTE: the evolution of mobile
broadband", IEEE COMMUNICATIONS
MAGAZINE, IEEE SERVICE CENTER,
PISCATAWAY, US, vol. 47, no. 4, 1 April 2009
(2009-04-01), pages 44-51, XP011506967, ISSN:
0163-6804, DOI: 10.1109/MCOM.2009.4907406**

## Description

## Technical Field

The present invention relates to a method for inter-cell interference coordination in a cellular Time Division Duplex (TDD) wireless communication system. Furthermore, the invention also relates to a method in a first control node, a method in a second control node, a first control node device, a second control node, a computer program, and a computer program product thereof

## Background of the Invention

In a LTE TDD network, all base stations (i.e. eNodeBs or eNB in LTE terminology) usually are well synchronized and use the same radio frame configuration. So, in an uplink (from a UE to a base station) subframe, a base station mainly incurs the interference from UEs transmitting uplink signals in neighboring cells, referred to as uplink-to-uplink (UL-to-UL) interference. In LTE Rel.8-11, uplink inter-cell interference coordination methods are used to mitigate UL-to-UL interference. However, in the future LTE TDD network, all base stations can use different radio frame configurations in order to adapt to their own traffic load. So, in an uplink subframe, a base station would incur the interference not only from UEs transmitting uplink signals in neighboring cells, but also from base stations transmitting downlink (from a base station to a UE) signals in neighboring cells. So, new methods should be developed to mitigate these inter-cell interferences.

In LTE, two radio frame structures are supported, i.e.:

- Type-1 radio frame, applicable to frequency division duplex (FDD), and
- Type-2 radio frame, applicable to time division duplex (TDD).

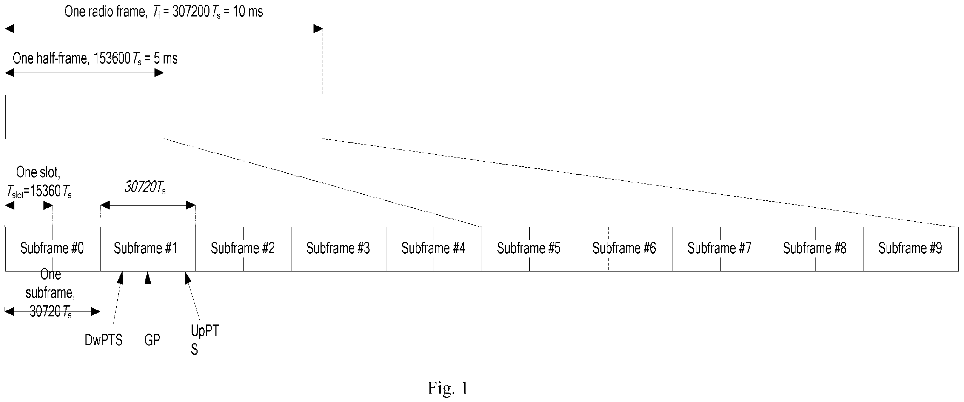

In LTE TDD, each Type-2 radio frame consists of two half-frames of length 5 ms each. Each half-frame consists of five subframes of length 1ms, with each subframe $i$ comprising two slots, $2i$ and $2i + 1$ of duration 0.5 ms each, as shown in figure 1. The supported uplink-downlink configurations are listed in Table 1 where, for each subframe in a radio frame, "D" denotes subframes reserved for downlink transmissions, "U" denotes subframes reserved for uplink transmissions, and "S" denotes a special subframe comprising three fields: DwPTS, GP and UpPTS. The total length of DwPTS, GP and UpPTS being equal to 1 ms. Subframe 1 is always a special subframe regardless of the uplink/downlink configuration, while subframe 6 can be a downlink subframe or a special subframe depending on the uplink/downlink configuration.

**Table 1: Uplink-downlink configurations**

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In LTE Rel. 8-11, inter-cell interference coordination (ICIC) was introduced to mitigate the uplink inter-cell interference. An eNB measures the power of uplink interference and noise on a physical resource block (PRB) basis, which is used to create uplink interference *Overload Indication* (OI) reports. A PRB is a time-frequency unit consisting of 12 consecutive orthogonal frequency-division multiplexing (OFDM) subcarriers and one time slot (0.5ms) in time domain comprising 6 or 7 OFDM symbols depending on cyclic prefix (CP) length. Low, medium, and high OI reports can be signaled to neighboring cells as per PRB-level. Upon receiving OI reports from neighboring cells, an eNB may take uplink scheduling or adjusting the transmission power of its served UEs to mitigate interference at neighboring eNBs.

On the other hand, an eNB can also send *High Interference Indication (HII)* indicating the occurrence of high interference sensitivity as per PRB-level in its uplink. Upon receiving HII from neighboring eNBs, an eNB can avoid scheduling its cell-edge UEs with higher transmission power in PRBs indicated as affected by high interference.

In LTE Rel. 8-11, the *OI* and *HII* reports are transmitted over X2 interface between eNBs. The backhaul delay over X2 interface is usually in the order of 10 ms. So, the same ICIC scheme would apply to all uplink subframes in a radio frame for several consecutive radio frames until a respective update signaling is received.

In LTE Rel. 8-11, kinds of reference signals (RS) can be used for data demodulation, channel measurement or interference measurement. In uplink, demodulation reference signals (DMRS) are used for data demodulation, and sounding reference signals (SRS) are used for channel measurement and/or interference measurement. While, in downlink, cell-specific reference signal (CRS) or channel state information reference signal (CSI-RS) is used for channel measurement or interference measurement, and CRS or demodulation reference signal (DMRS) is used for data demodulation depending on the transmission mode. Besides, CRS is also used for reference signal received power (RSRP) measurement in downlink. Configuration of CRS in a cell can be inferred from its cell-ID, including the time-frequency resource and the related scrambling sequence of CRS. Configuration of CSI-RS is signaled to a terminal, indicating the time-frequency resources and the associated antenna port of CSI-RS.

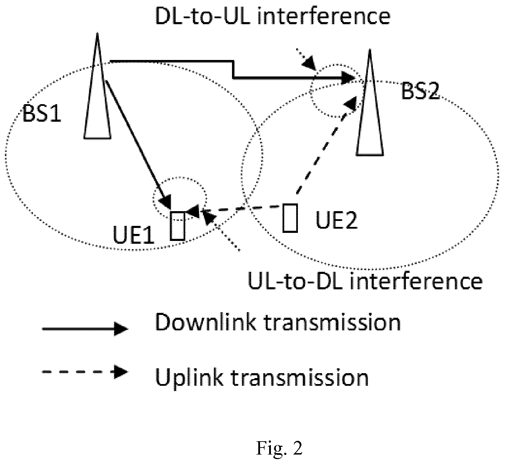

In TDD network, when different radio frame configurations are used in adjacent cells, it might lead to the so-called *TDD-specific cross-link interference* as shown in Figure 2, i.e., the downlink transmission in a serving cell might be interfered by the uplink transmission in a neighboring cell, referred to as *uplink-to-downlink (UL-to-DL) interference,* and vice versa, i.e., the uplink transmission in the serving cell might be interfered by the downlink transmission in a neighboring cell, referred to as *downlink-to-uplink (DL-to-UL) interference.*

In LTE Rel. 8-11, an eNB can take uplink Inter-Cell Interference Coordination (ICIC), i.e. uplink scheduling and/or uplink power control, to mitigate uplink-to-uplink interference at its neighbouring eNBs. However, it is not supported yet for an eNB to perform downlink scheduling and/or downlink power control to mitigate the downlink-to-uplink inter-cell interference at its neighboring eNBs.

According to a prior art solution an eNB is supposed to perform downlink scheduling or uplink scheduling in its downlink or uplink subframe, respectively. However, the eNB cannot discriminate between uplink-to-uplink and downlink-to-uplink interference, and therefore might perform improper operation. For instance, an eNodeB may (unnecessarily) attempt to reduce the interference created at a neighboring cell by adjusting its uplink scheduling, whereas the neighboring cell suffers from strong DL-to-UL interference from other eNodeBs.

WO2012/105766A2 discloses a method of performing inter-cell interference coordination (ICIC) in a wireless communication system including: receiving a time domain ICIC information of a first cell and a frequency domain ICIC information of the first cell from the first cell by a second cell; assuming validity of the frequency domain ICIC information based on the time domain ICIC information by the second cell; and performing an uplink or a downlink scheduling by the second cell based on a result of the assuming step.

US2012/046028A1 discloses a method for controlling inter-cell interference including receiving a measured uplink interference level through a first backhaul link; determining a transmit power level based on the measured uplink interference level; and sending through a second backhaul link the transmit power level for reconfiguring either a user equipment or a femtocell eNodeB. In one example, it may include receiving a measured downlink interference through a first backhaul link; determining a transmit power level based on the measured downlink interference; and sending a message comprising the transmit power level to a femtocell eNodeB using a second backhaul link.

## Summary of the Invention

An object of the present invention is to provide a solution which mitigates or solves the drawbacks and problems of prior art solutions.

Another object of the invention is to improve system performance by reducing inter-cell interference in a TDD wireless communication system. Methods and apparatuses are provided according to the appended claims.

According to a first aspect of the invention, the above mentioned objects are achieved by a method for inter-cell interference coordination in a cellular Time Division Duplex, TDD, wireless communication system using radio frames comprising subframes for uplink and downlink transmissions, said system including:

at least a first network control node arranged for controlling at least one first cell,
at least a second network control node arranged for controlling at least one second cell; said method comprising the steps of:

transmitting, by said first network control node, at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between said first and second cells;
receiving, by said second control node, said interference indicator; and

performing, by said second network control node, scheduling and/or power control in the downlink or in the uplink and/or changing subframe configuration for said one or more subframes based on said interference indicator.

According to a second aspect of the invention, the above mentioned objects are achieved by a method in a first network control node for inter-cell interference coordination in a cellular Time Division Duplex, TDD, wireless communication system using radio frames comprising subframes for uplink and downlink transmissions, said system including:

said first network control node arranged for controlling at least one first cell,
at least a second network control node arranged for controlling at least one second cell; said method comprising the step of:
transmitting, by said first network control node, at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between said first and second cells.

According to a third aspect of the invention, the above mentioned objects are achieved by a method in a second control node for inter-cell interference coordination in a cellular Time Division Duplex, TDD, wireless communication system using radio frames comprising subframes for uplink and downlink transmissions, said system including:

at least a first network control node arranged for controlling at least one first cell,
said second network control node arranged for controlling at least one second cell; said method comprising the steps of:

receiving, by said second control node, at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between said first and second cells; and
performing, by said second network control node, scheduling and/or power control in the downlink or in the uplink and/or changing subframe configuration for said one or more subframes based on said interference indicator.

The present method may be executed in processing means and may be comprised in a computer program product as a computer program.
According to a fourth aspect of the invention, the above mentioned objects are achieved with a first network control node device arranged for inter-cell interference coordination in a cellular Time Division Duplex, TDD, wireless communication system using radio frames comprising subframes for uplink and downlink transmissions, said system including:

said first network control node arranged for controlling at least one first cell,
at least one second network control node arranged for controlling at least one second cell; said first network control node device comprising:
a transmit unit arranged for transmitting at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between said first and second cells.

According to a fifth aspect of the invention, the above mentioned objects are achieved with a second control node device arranged for inter-cell interference coordination in a cellular Time Division Duplex, TDD, wireless communication system using radio frames comprising subframes for uplink and downlink transmissions, said system including:

at least one first network control node arranged for controlling at least one first cell,
said second network control node arranged for controlling at least one second cell; said second control node device comprising:

a receiver unit arranged for receiving at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between said first and second cells; and
a control unit arranged for performing scheduling and/or power control in the downlink or in the uplink and/or changing subframe configuration for said one or more subframes based on said interference indicator.

The present invention provides a solution in which the coordination of network control nodes controlling different cells can be substantially improved. By exchange of essential inter-cell interference information in the form of interference indicators between the control nodes, uplink and/or downlink radio resources can be allocated in an effective manner.

Moreover, the present invention also provides improved methods for measuring inter-cell interference between different cells which means that system performance can further be improved.

Further applications and advantages of the invention will be apparent from the following detailed description.

## Brief Description of the Drawings

The appended drawings are intended to clarify and explain different embodiments of the present invention in which:

- Fig. 1 illustrates frame structure of Type-2;
- Fig.2 illustrates TDD cross-link interference;
- Fig. 3 illustrates subframe categorization according to the invention;
- Fig. 4 illustrates uplink-to-uplink inter-cell interference for restricted uplink subframes represented by an average over multiple radio frames; and
- Fig. 5 illustrates uplink-to-uplink inter-cell interference measurement filtered over all restricted uplink subframes over multiple radio frames.

## Detailed Description of the Invention

To achieve the aforementioned and other objects, the present invention relates to a method in a TDD cellular wireless communication system and corresponding methods in a first network control node and a second network control node. As mentioned the system is a TDD system using radio frames for uplink and downlink transmissions between base stations and mobile stations. Further, the system comprises at least one first network control node arranged for controlling at least one first cell and at least one second network control node arranged for controlling at least one second cell. The control node may be a base station or another network node, such as an access point or a network controller, with the corresponding capabilities to control one or more cells. The control node is e.g. responsible for allocating radio resources and/or power control of downlink and uplink data transmissions.

The present method comprises the following step in the first control node: transmitting at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between the first and second cells.

Furthermore, the method comprises the following steps in the second control node: receiving the interference indicator from the first control node; and performing scheduling and/or power control in the downlink or in the uplink and/or changing subframe configuration for the one or more subframes based on the interference indicator so as to mitigate the inter-cell interference. The performing scheduling and/or power control may be performed according to any suitable method, such as ICIC. Regarding the changing of subframe configuration this implies that downlink subframes are changed to uplink subframes and vice versa to mitigate inter-cell interference.

If downlink-to-uplink interference is dominant, the second control node can perform scheduling and/or power control in downlink subframe(s) to mitigate downlink-to-uplink inter-cell interference at the neighboring base stations. Otherwise, if uplink-to-uplink interference is dominant, the control node doesn't need to take mentioned interference into account when scheduling its downlink data transmission.

Correspondingly, if uplink-to-uplink interference is dominant, the second control node can perform scheduling and/or power control in uplink subframe(s) to mitigate uplink-to-uplink inter-cell interference at the neighboring cells. Otherwise, if downlink-to-uplink interference is dominant, the second control doesn't need to take mentioned interference into account when scheduling its uplink data transmission.

If the interference indicator at least relates to downlink-to-uplink inter-cell interference $I_{DL\text{-}to\text{-}UL}$ then the scheduling and/or power control is performed in the downlink and/or changing subframe configuration for the one or more subframes, whilst if the interference indicator at least relates to uplink-to-uplink inter-cell interference $I_{UL\text{-}to\text{-}UL}$ the scheduling and/or power control is performed in the uplink and/or changing subframe configuration for the one or more subframes according to an embodiment of the invention.

Moreover, if the interference indicator at least relates to a sum of downlink-to-uplink $I_{DL\text{-}to\text{-}UL}$ and uplink-to-uplink $I_{UL\text{-}to\text{-}UL}$ inter-cell interference and the one or more subframes are downlink subframes of the second network control node, scheduling and/or power control in the downlink is performed and/or changing subframe configuration for the one or more subframes. Accordingly, if the interference indicator at least relates to a sum of downlink-to-uplink $I_{DL\text{-}to\text{-}UL}$ and uplink-to-uplink $I_{UL\text{-}to\text{-}UL}$ inter-cell interference and the one or more subframes are uplink subframes of the second control node, scheduling and/or power control is performed in the uplink and/or changing subframe configuration for the one or more subframes according to another embodiment of the invention.

In the following, further exemplary embodiments of different inter-cell interference coordination schemes are disclosed depending on the received interference indicator.

According to an embodiment, a second control node receives an inter-cell interference indicator for a subframe in a radio frame, where the subframe is a downlink subframe for the second control node. Hence, in the downlink subframe or any of other downlink subframes:

- If the interference indicator comprises at least metrics of down-to-uplink interference, the second control node can use a ICIC in downlink;
- If the interference indicator comprises a sole metric of overall uplink interference, the second control node can use a ICIC scheme in downlink;
- If the interference indicator comprises a sole metric of uplink-to-uplink interference, the second control node can choose not to perform ICIC in the downlink;
- If the interference indicator comprises only the metrics of uplink-to-uplink and overall uplink interference, the second control node determines whether downlink-to-uplink interference is dominant by comparing the metric of uplink-to-uplink interference with the metric of overall uplink interference. If the downlink-to-uplink interference is dominant and the second control node can use an ICIC scheme in downlink to reduce interference at the neighboring cell.

Assuming that possible value for interference metric is low, middle or high, once the overall interference metric is of 'high' value and uplink-to-uplink interference metric is of 'low' value, downlink-to-uplink interference may be regarded as dominant interference. Alternatively, once the overall interference metric is of 'middle' value and uplink-to-uplink interference metric is of 'high' value, downlink-to-uplink interference may not be regarded as dominant interference.

As mentioned a second control node can use ICIC in downlink to mitigate downlink-to-uplink inter-cell interference at its neighboring cells. The ICIC include downlink scheduling and/or downlink power control and/or change the transmission direction of one or more subframes.

For instance, a second control node can reduce its downlink transmission power in the PRB within a downlink subframe that are flagged as suffering high downlink-to-uplink inter-cell interference. Alternatively, a second control node could blank one or several downlink subframes, i.e., avoid downlink transmission, indicated in the interference indicator. According to another example, a second control node could re-configure one or several downlink subframes indicated in the interference indicator as uplink subframes for uplink transmission.

According to yet another embodiment, a second control node receives an inter-cell interference indicator for a subframe in a radio frame, where the subframe is an uplink subframe for the second control node. Hence, in the uplink subframe or any of other uplink subframes:

- If the interference indicator comprises at least the metrics of uplink-to-uplink interference, the second control node can use an ICIC in uplink;
- If the interference indicator comprises the sole metric of overall uplink interference, the second control node can use an ICIC scheme in uplink;
- If the interference indicator comprises the sole metric of downlink-to-uplink interference, the second control node may choose not to perform ICIC in the uplink.
- If the interference indicator comprises only the metrics of downlink-to-uplink and overall uplink interference, the second control node determines whether uplink-to-uplink interference is dominant by comparing the metric of downlink-to-uplink interference with the metric of overall uplink interference. If the uplink-to-uplink interference is dominant and the second control node can use an ICIC scheme in uplink to reduce interference at the neighboring cells.

Assuming that the possible value of a interference metric is low, middle or high. Once the overall interference metric is of 'high' value and downlink-to-uplink interference metric is of 'low' value, uplink-to-uplink interference is regarded as dominant interference. Alternatively, once the overall interference metric is of 'middle' value and downlink-to-uplink interference metric is of 'high' value, uplink-to-uplink interference is not regarded as dominant interference.

Also in these cases the second control node can use ICIC in uplink to mitigate uplink-to-uplink inter-cell interference at the neighboring cells. The ICIC include uplink scheduling and/or uplink power control and/or change the transmission direction of one or more subframes. For instance, a second control node can optimize its uplink scheduling so that its cell-edge mobile stations (which typically require higher transmission power) are scheduled only in PRB pairs indicated as suffering low interference. Alternatively, the second control node can signal its users to reduce the uplink transmission power in PRB indicated as suffering high interference. In another example, the second control node can also blank the transmission in one or several uplink subframes or in sub-bands within a subframe. In another example, a second control node could re-configure one or several uplink subframes indicated in the interference indicator as downlink subframes for downlink transmission.

*Measurements*

For proper inter-cell interference coordination it is beneficial to measure not only the overall uplink inter-cell interference, but also the individual uplink-to-uplink and/or downlink-to-uplink interference. In the following descriptions, embodiments are described for uplink-to-uplink and downlink-to-uplink inter-cell interference measurements, respectively.

According to the present invention, the uplink inter-cell interference are represented as $I_{UL\text{-}to\text{-}UL}$, $I_{DL\text{-}to\text{-}UL}$ and $I_{UL}$ respectively for uplink-to-uplink, downlink-to-uplink and overall uplink interference. The overall uplink interference $I_{UL}$ is the sum of $I_{UL\text{-}to\text{-}UL}$ and $I_{DL\text{-}to\text{-}UL}$.

According to an embodiment of the invention, the present method further comprises the step of grouping/categorizing subframes for uplink and downlink transmissions into first, second and third group of subframes, i.e.: a first group comprising restricted uplink subframes, i.e. subframes only used for uplink TDD transmissions; a second group comprising restricted downlink subframes, i.e. subframes only used for downlink TDD transmissions; and a third group comprising flexible subframes, i.e. subframes used for uplink or downlink TDD transmissions. Thus *restricted uplink subframes* represent subframes that are always used for uplink transmission for all possible TDD radio frame configuration, regardless of the traffic load in the cell. *Restricted downlink subframes* represent subframes that are always used for downlink transmission for all possible TDD radio frame configuration, regardless of the traffic load in the cell. *Flexible subframes* represent subframes that can be used for either downlink or uplink transmission in different TDD radio frame configuration, depending of the traffic load in the cell.

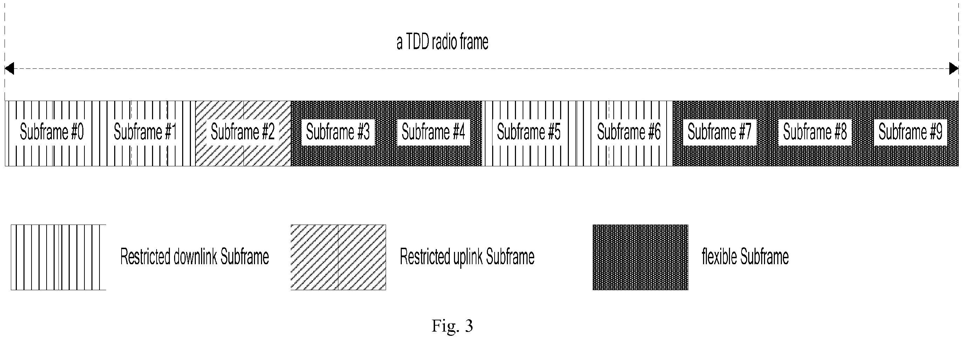

In TDD-based systems where different radio frame configurations can be selected it is beneficial, at least for the purpose of measuring the inter-cell interference at a second control node, such as a base station, to distinguish between subframes that are *always used* as either uplink or downlink transmission in any of the allowed radio frame configurations (i.e., restricted subframes), and subframes that can be *flexibly used* for either uplink or downlink operation in different radio frame configurations. The categorization of subframes of a TDD radio frame into restricted downlink subframes, restricted uplink subframes, and flexible subframes according to the invention can either be specified by a wireless communication standard or signaled by the network as part of the system information, so that all base stations have the same information about the subframes in a radio frame. In the LTE system, there are seven TDD radio frame configurations that can be selected to accommodate different uplink/downlink traffic loads in a cell which can be categorized as restricted uplink subframes, restricted downlink subframes, and flexible subframes as illustrated in Figure 3.

It may be advantage that interference indicator further indicates whether the inter-cell interference was measured by the first network control node in one or more subframes in the group comprising restricted uplink subframes, restricted downlink subframes and flexible subframes.

*UL-to-UL interference measurement aspects*

To measure at a network control node the uplink-to-uplink interference $I_{UL\text{-}to\text{-}UL}$ for an uplink subframe n two major methods can be used:

- Estimate $I_{UL\text{-}to\text{-}UL}(n)$ directly from the received uplink signal in subframe *n*;

- Estimate $I_{UL\text{-}to\text{-}UL}(n)$ indirectly from equation $I_{UL}(n) = I_{UL\text{-}to\text{-}UL}(n) + I_{DL\text{-}to\text{-}UL}(n)$ as $I_{UL\text{-}to\text{-}UL}(n) = I_{UL}(n) - I_{DL\text{-}to\text{-}UL}(n)$ by estimating the overall uplink inter-cell interference $I_{UL}(n)$ and the downlink-to-uplink inter-cell interference $I_{DL\text{-}to\text{-}UL}(n)$ directly from the received uplink signal in subframe *n*.

In what follow how to measure the uplink-to-uplink inter-cell interference $I_{UL\text{-}to\text{-}UL}$ directly in uplink subframe is described, whereas the case of estimating $I_{UL\text{-}to\text{-}UL}$ indirectly is a step that follows from the direct estimation of $I_{DL\text{-}to\text{-}UL}$ inter-cell interference that will be described subsequently.

To estimate the uplink-to-uplink inter-cell interference $I_{UL\text{-}to\text{-}UL}$ in an uplink subframe *n* of a radio frame, the invention according to some preferred embodiments discloses different methods depending on whether the subframe is a restricted uplink subframe, a restricted downlink subframe, or a flexible subframe.

In one embodiment, the uplink-to-uplink inter-cell interference $I_{UL\text{-}to\text{-}UL}$ estimated in a restricted uplink subframe *n* is the total overall uplink inter-cell interference, i.e. $I_{UL\text{-}to\text{-}UL}(n) = I_{UL}(n)$; further, the uplink-to-uplink inter-cell interference $I_{UL\text{-}to\text{-}UL}$ estimated in a restricted downlink subframe *n* is zero, i.e., $I_{UL\text{-}to\text{-}UL}(n) = 0$.

As every restricted uplink subframe corresponds to an uplink subframe in all possible TDD radio frame configurations, the downlink-to-uplink inter-cell interference is zero and the uplink-to-uplink interference follows from $I_{UL}(n) = I_{UL\text{-}to\text{-}UL}(n) + I_{DL\text{-}to\text{-}UL}(n)$ as $I_{UL\text{-}to\text{-}UL}(n) = I_{UL}(n)$. For the same reasoning, $I_{UL\text{-}to\text{-}UL}(n) = 0$ is zero in restricted downlink subframes. Therefore, any method used for measuring the overall inter-cell interference is applicable to restricted uplink subframes.

In another embodiment of the invention, a control node estimates the uplink-to-uplink interference in a flexible subframe $n$ as fraction of the uplink interference measured in a restricted uplink subframe as $I_{UL\text{-}to\text{-}UL,f}(n) = \alpha_{UL}(n) \cdot I_{UL,ristriced\_UL}$, where $\alpha_{UL}(n) \in [0,1]$ is an uplink activation factor denoting the percentage of neighboring control nodes, such as base stations, using the flexible subframe $n$ as an uplink subframe.

According to the previous embodiment, the uplink-to-uplink interference estimated in a restricted uplink subframe, hereby indicated by $I_{UL,ristriced\_UL}$ is an accurate measure of the overall uplink inter-cell interference when all neighboring base stations operate in uplink in the same subframe. Therefore, by exchanging the TDD radio frame configuration of neighboring base stations, a base station can determine an uplink activation factor for each flexible subframe n represented by:

$$\alpha_{UL}(n) = \frac{\text{number of neighboring base stations using subframe } n \text{ as uplink subframe}}{\text{total number of neighboring base stations}}.$$

The value of $\alpha_{UL}(n) \in [0,1]$ denote the fraction of neighboring base stations using the flexible subframe $n$ as an uplink subframe. Alternatively, the value $\alpha_{UL}(n)$ could be signaled by a network controller to all network control nodes for the respective flexible subframes. This solution has the benefit of enabling a control node to estimate the uplink-to-uplink inter-cell interference in any flexible subframe as a fraction of the inter-cell interference measured in a restricted uplink subframe.

In one embodiment, for at least a restricted uplink subframe and/or for a flexible subframe used as an uplink subframe at a control node measuring uplink interference, neighboring control nodes exchange the configuration of uplink scheduling grants and/or uplink reference signal for mobile terminals, such as UEs, in the respective service area for the subframe.

By exchanging the configuration of uplink reference signals among neighboring control nodes for flexible subframes, a control node estimates the individual uplink-to-uplink inter-cell contributions $I_{UL\text{-}to\text{-}UL,b}(n)$ created by mobile stations in each neighboring cell by measuring the received power from uplink reference signals transmitted by mobile stations in the neighboring cell. Therefore, a control node using a flexible subframe as an uplink subframe can estimate the uplink-to-uplink inter-cell as the sum of all the received uplink reference signal power transmitted by mobile stations in neighboring cells. In the LTE system, SRS and DMRS can be used for the scope. Similarly, by exchanging uplink scheduling grants among control nodes, a control node can decode the uplink data transmission from mobile stations in neighboring cells and estimate the uplink-to-uplink inter-cell interference in a flexible subframe used as uplink sub frame as the sum of the received power.

A clear benefit of this method is to enable to directly measure the individual uplink-to-uplink inter-cell interference from each neighboring cell. So, according to such individual interference measurement received from a target control node, a neighboring control node can perform the inter-cell interference coordination in an uplink subframe to mitigate the exact interference from its own mobile stations to the target control node.

A further advantage of this method, when used in restricted uplink subframe, is to enable a control node to estimate the uplink-to-uplink inter-cell interference contributions from *all* the neighboring cells. Thus, if the radio frame configuration of neighboring cells is also known at a control node, the measurement of $I_{UL\text{-}to\text{-}UL,b}$ taken in a restricted uplink subframe can be reused in each flexible subframe to reconstruct the corresponding uplink-to-uplink inter-cell interference $I_{UL\text{-}to\text{-}UL}(n)$ by summing up the individual contributions $I_{UL\text{-}to\text{-}UL,b}(n)$ corresponding to cell $b$ using the flexible subframe as a uplink subframe, represented by $I_{UL\text{-}to\text{-}UL}(n) = \sum_{b \in B(n)} I_{UL\text{-}to\text{-}UL,b}(n)$, where $B(n)$ denotes the set of base stations configuring the flexible subframe n as a uplink subframe.

*DL-to-UL interference measurement aspects*

Similar to the uplink-to-uplink interference, two major methods can be used to measure the uplink-to-uplink interference $I_{UL\text{-}to\text{-}UL}$ at a base station for an uplink subframe $n$:

- Estimate $I_{DL\text{-}to\text{-}UL}(n)$ directly from the received uplink signal in subframe $n$;
- Estimate $I_{DL\text{-}to\text{-}UL}(n)$ indirectly from equation $I_{UL}(n) = I_{UL\text{-}to\text{-}UL}(n) + I_{DL\text{-}to\text{-}UL}(n)$ as $I_{DL\text{-}to\text{-}UL}(n) = I_{UL}(n) - I_{UL\text{-}to\text{-}UL}(n)$ by estimating the overall uplink inter-cell interference $I_{UL}(n)$ and the uplink-to-uplink inter-cell interference $I_{UL\text{-}to\text{-}UL}(n)$ directly from the received uplink signal in subframe $n$.

In what follow, how to measure the downlink-to-uplink inter-cell interference $I_{DL\text{-}to\text{-}UL}$ directly in uplink subframe is described, whereas the case of estimating $I_{DL\text{-}to\text{-}UL}$ indirectly follows from previous embodiments. In the description, we further distinguish methods depending on whether the subframe is a restricted uplink subframe, a restricted downlink subframe, or a flexible subframe.

According to an embodiment, the downlink-to-uplink inter-cell interference $I_{DL\text{-}to\text{-}UL}$ estimated in a restricted downlink subframe $n$ is represented by the total overall inter-cell interference at a control node, i.e. $I_{DL\text{-}to\text{-}UL}(n) = I_{UL}(n)$; further, the downlink-to-uplink inter-cell interference $I_{DL\text{-}to\text{-}UL}$ estimated in a restricted uplink subframe $n$ is zero, i.e. $I_{DL\text{-}to\text{-}UL}(n) = 0$. For the case of a restricted uplink subframe there are no downlink transmissions in neighboring base station, so is clear that $I_{DL\text{-}to\text{-}UL}(n) = 0$.

For the case of a restricted downlink subframe, where all control nodes transmit in downlink, it is not straightforward how to estimate the downlink-to-uplink interference at a control node. However, one method is to reserve, at the measuring control node, time-frequency resources that are not used for downlink transmission. In these resources, the control node estimates $I_{DL\text{-}to\text{-}UL}$ as the measured received power due to downlink transmissions in all neighboring cells. In one exemplifying embodiment, a control node reserves the entire downlink frequency bandwidth in one restricted downlink subframe to estimate $I_{DL\text{-}to\text{-}UL}$, i.e. the control node does not use the subframe for downlink transmission. In the LTE system, this method can be applied, for instance, to the first subframe of any radio frame. A round-robin scheduling of base stations could help coordinating the base station measurement in this subframe, i.e. each base station announces in which radio frame and restricted downlink subframe will measure the downlink-to-uplink inter-cell interference $I_{DL\text{-}to\text{-}UL}$, so that no other base stations will use the same subframe for measurements. In another example, a network control entity, disseminate a measurement schedule indicating to each base station which restricted downlink subframe and which radio frame to use for measuring $I_{DL\text{-}to\text{-}UL}$.

According another embodiment, at least a restricted downlink subframe $n$ or in a flexible subframe $n$ used as uplink subframe, a control node estimates the individual downlink-to-uplink inter-cell contributions $I_{DL\text{-}to\text{-}UL,b}(n)$ created by each neighboring control node by measuring the received power from downlink reference signals transmitted in neighboring cells .

By exchanging the configuration of downlink reference signals among neighboring control nodes, a measuring control node can estimate the individual downlink-to-uplink interference contributions $I_{DL\text{-}to\text{-}UL,b}(n)$ created by each neighboring control node. A natural choice is to use this method in flexible subframes used for uplink operation at the measuring control node.

A very effective choice is to use a restricted downlink subframe in which the measuring control node refrains from transmitting in some or all time-frequency resources of the downlink frequency band and utilizes the resources for measuring the inter-cell interference. The knowledge of the configuration of downlink reference signals transmitted in neighboring cells has the benefit of allowing the measuring cell to isolate the individual inter-cell interference contributions $I_{DL\text{-}to\text{-}UL,b}(n)$ as Reference Signal Received Power (RSRP) received from each neighboring control node. In the system, downlink reference signals suitable for this method are Common Reference Signals (CRS), Channel State Information Reference Signal (CSI-RS) or Demodulation Reference Signals (DMR) or other downlink reference signals with cell-specific configuration.

A clear benefit of this method is to enable to directly measure the individual downlink-to-uplink inter-cell interference created by each neighboring control node. So, according to such individual interference measurement received from a target base station, a neighboring base station can perform the inter-cell interference coordination in a downlink subframe to mitigate the exact interference from its own to the target control node.

A further advantage of this method, when used in restricted downlink subframe, is to enable a control node to estimate the downlink-to-uplink inter-cell interference contributions from *all* the neighboring cells. Thus, if the radio frame configuration of neighboring cells is also known at a control node, the measurement of $I_{DL\text{-}to\text{-}UL,b}$ taken in a restricted downlink subframe can be reused in each flexible subframe to reconstruct the corresponding downlink-to-uplink inter-cell interference $I_{DL\text{-}to\text{-}UL}(n)$ by summing up the individual contributions $I_{DL\text{-}to\text{-}UL,b}$ corresponding to base stations $b$ using the flexible subframe as a downlink subframe, represented by: $I_{DL-to-UL}(n) = \sum_{b \in B(n)} I_{DL-to-UL,b}$ , where $B(n)$ denotes the set of control nodes configuring the flexible subframe n as a downlink subframe.

According to another embodiment of the invention, a control node estimates the downlink-to-uplink interference in a flexible subframe $n$ as fraction of the uplink inter-cell interference measured in a restricted downlink subframe as $I_{DL\text{-}to\text{-}UL,f}(n) = \alpha_{DL}(n) \cdot I_{UL,ristricted\_DL}$, where $\alpha_{DL}(n) \in [0,1]$ is a downlink activation factor denoting the percentage of neighboring control nodes using the flexible subframe $n$ as an downlink subframe.

This method is similar to a previous embodiment addressing the uplink-to-uplink interference measurement. When a control node measures the overall uplink interference $I_{UL,ristricted\_DL}$ in a restricted downlink subframe, the base station can further estimate the downlink-to-uplink interference in a flexible subframe used for uplink operation as a fraction of $I_{UL,ristricted\_DL}$. By exchanging the TDD radio frame configuration of neighboring control nodes, a control node can determine a downlink activation factor for each flexible subframe n represented by:

$$\alpha_{DL}(n) = \frac{\text{number of neighboring base stations using subframe } n \text{ as downlink subframe}}{\text{total number of neighboring base stations}}.$$

Therefore, $\alpha_{DL}(n) = 1-\alpha_{UL}(n)$ denote the fraction of neighboring control nodes using the flexible subframe $n$ as a downlink subframe. Alternatively, the value $\alpha_{DL}(n)$ could be signaled by a network controller to all control nodes for the respective flexible subframes.

According to a further embodiment, a control node signals to the neighboring control nodes a measurement request signal, comprising at least an indicator of a subframe and a radio frame in which it will measure the downlink-to-uplink interference. The neighboring control nodes receiving the measurement request reply with a downlink reference signal configuration.

A different approach is to enable coordination among neighboring cells allowing a control node to signal an interference measurement request to neighboring control nodes comprising at least an indicator of a subframe and a radio frame in which the interference shall be measured. The response from a neighboring control node shall include the chosen configuration of a measurement reference signal that will be sent in the subframe specified in the measurement request. The measurement reference signal can be transmitted over whole or a part of the downlink frequency bandwidth. The measurement reference signal can be DMRS, CSI-RS or a new reference signal. The new reference signal can be transmitted over only 1 OFDM symbol. Measurement request can be transmitted over a physical layer control channel or in higher layer. Response to the measurement request can be transmitted over a control channel in physical layer or signaled in higher layer.

According to another embodiment, a dedicated control channel is used for measuring the downlink-to-uplink inter-cell interference. A new dedicated control channel transmitted by control nodes can be used either to directly measure the downlink-to-uplink inter-cell interference at neighboring control nodes, or to carry the necessary control information to support the various embodiments of the present invention. In the former case, the dedicated control channel behaves as a reference signal itself. In the latter case, the new control channel coveys a number of information bits, indicating at least any or a combination of the following information:

- The radio frame configuration of the control node;
- The physical layer identity of the control node;
- One or multiple downlink reference signal configurations for one or multiple subframes;
- One or multiple uplink reference signal configurations for one or multiple subframes and/or uplink scheduling grants for mobile stations;
- The downlink and or uplink activation factor for each flexible subframe of a control node.

Such dedicated control channel can be a physical layer channel and can be transmitted by a control node either in a restricted downlink subframe or flexible subframe used as a downlink subframe.

*Filtering of interference measurements*

Each of the aforementioned inter-cell interference measurements used in the present invention, namely the uplink-to-uplink interference $I_{UL\text{-}to\text{-}UL}$, the downlink-to-uplink interference $I_{DL\text{-}to\text{-}UL}$, and the overall uplink inter-cell interference $I_{UL}$, may be estimated per each individual uplink subframe in a radio frame according to one or a combination of the following methods:

- For each individual physical resource block in the uplink bandwidth;
- For at least a sub-band of the uplink band comprising a group of at least one physical resource block;
- For all physical resource blocks in the uplink bandwidth;
- By averaging (filtering) the uplink interference measurement of an uplink subframe in a radio frame across the same subframe over multiple radio frames;
- Filtering the uplink interference measurement across all or a group of subframes of the same category within a radio frame, and across multiple radio frames;

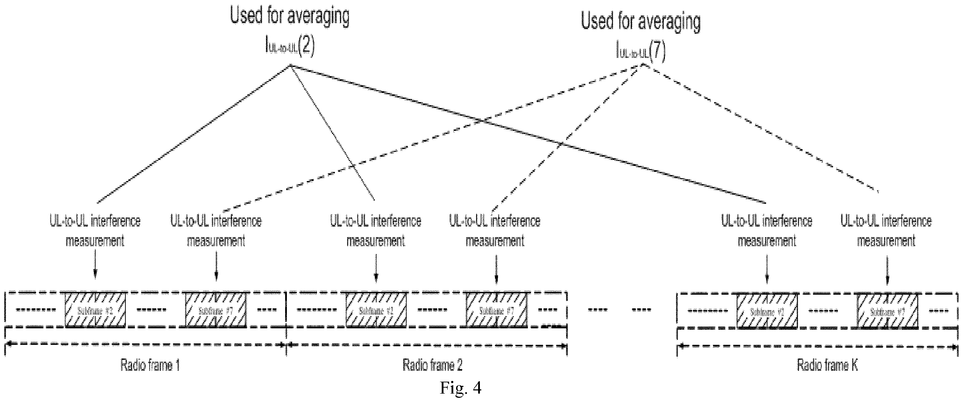

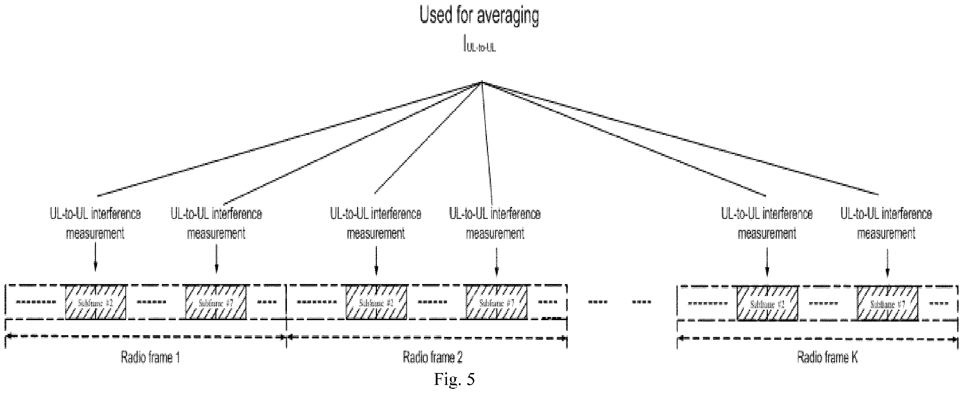

In one example, individual uplink-to-uplink interference measurements can be taken for each restricted uplink subframe and averaged/filtered, for each individual restricted uplink subframe, over multiple radio frames as illustrated in Figure 4. In another example, a single uplink-to-uplink interference measurement averaged over all restricted uplink subframes and several radio frames is used to represent the uplink-to-uplink inter-cell in every subframe as illustrated in Figure 5. In this example, subframe 2 and 7 are restricted uplink subframes in a TDD cell. In the first case, two individual uplink-to-uplink interference metrics for subframe 2 and 7, respectively, are filtered over multiple radio frames. In the second case, a single uplink-to-uplink interference measurement, averaged across all restricted uplink subframes and over multiple radio frames, represents the uplink-to-uplink interference for both subframe 2 and 7. Similar methods apply to the computation of downlink-to-uplink interference and the overall interference in downlink restricted subframes and flexible subframes.

*Signaling aspects*

In the TDD network, such LTE, base stations exchange signaling information related to the measured uplink inter-cell interference for the purpose of supporting inter-cell interference coordination with neighboring base station on a subframe basis.

Hence, according to one embodiment, a control node transmits to at least a neighboring control node at least an uplink inter-cell interference indicator referred to at least a subframe in a radio frame comprising any or a set of the interference metrics for $I_{UL\text{-}to\text{-}UL}$, $I_{DL\text{-}to\text{-}UL}$, and $I_{UL}$ respectively.

The inter-cell interference indicator signaled by a control node may comprise at least one or two of interference metrics for $I_{UL\text{-}to\text{-}UL}$, $I_{DL\text{-}to\text{-}UL}$ and $I_{UL}$, as the third one can be derived from $I_{UL}(n) = I_{UL\text{-}to\text{-}UL}(n) + I_{DL\text{-}to\text{-}UL}(n)$. The benefit of exchanging interference information specific to individual subframes in a radio frame is to implement different inter-cell interference coordination for each individual subframe. The interference information relative to a subframe in a radio frame would remain valid at a control node until a new interference indicator for said subframe is received.

According to yet another embodiment, the signaled inter-cell interference indicator indicates at least one interference metric measured for at least one subframe in a radio frame with one of the following frequency granularity:

- One interference value per physical resource block;
- One interference value per sub-band or group of at least two physical resource blocks;
- One interference value for the entire uplink bandwidth, i.e. wideband.

Reporting one value of the measured inter-cell interference in a subframe of a radio frame for each PRB pair of the system bandwidth has the benefit of enabling better inter-cell interference coordination by resource scheduling or power control on a PRB pair basis. This, however, requires higher signaling overhead, especially if different inter-cell interference indicators are signaled for different subframes in a radio frame. To resolve this issue, the inter-cell interference indicator for a subframe in a radio frame convey fewer values referring to a groups of physical resource blocks (i.e., sub-bands) or a single value for the entire uplink bandwidth.

The signaled inter-cell interference indicators can indicate interference metric with different frequency granularity. This can enable a neighboring control node performing inter-cell interference coordination schemes with different frequency granularity. For an example, if the interference metric of $I_{UL\text{-}to\text{-}UL}$ is as per PRB basis, the corresponding ICIC is performed as per PRB basis. While if the interference metric of $I_{DL\text{-}to\text{-}UL}$ or $I_{UL}$ is valid for the whole uplink bandwidth, i.e. wideband, the corresponding ICIC is performed over the whole uplink bandwidth.

In one embodiment, the signaled inter-cell interference indicator indicates at least one interference metric measured for a group of subframes in a radio frame with one of the following granularity:

- One interference value per physical resource block;
- One interference value per sub-band or group of at least two physical resource blocks;
- One interference value for the entire uplink bandwidth, i.e. wideband.

The difference from the previous embodiment is that the interference indicator refers not to a single subframe in a radio frame, but to a group of subframes. This further reduces the signaling overhead and it is applicable to cases in which subframes of the same kind, as the restricted uplink subframes in the example of Figure 5, experience similar (average) interference levels over multiple radio frames.

According to one embodiment, the interference indicator signaled by a control node further indicates whether the interference was measured in one or all of the following:

- A restricted uplink subframe;
- A restricted downlink subframe;
- A flexible (uplink) subframe.

This embodiment has the benefit of obtaining up to three kinds of interference metrics by only measuring overall uplink interferences. Actually, for restricted uplink subframe and restricted downlink subframe and flexible uplink subframe, the respective overall uplink interferences are three different kinds of interferences, i.e. uplink-to-uplink interference, downlink-to-uplink interference, overall uplink interference.

As every restricted uplink subframe corresponds to an uplink subframe in all possible TDD radio frame configurations, the downlink-to-uplink inter-cell interference is zero and the uplink-to-uplink interference is same as the overall uplink interference. Correspondingly, as every restricted downlink subframe corresponds to a downlink subframe in all possible TDD radio frame configurations, the uplink-to-uplink inter-cell interference is zero and the downlink-to-uplink interference is same as the overall uplink interference. However, as every flexible uplink subframe might possibly be used as uplink or downlink subframe in neighboring cells, only the overall uplink inter-cell interference can be directly measured in flexible uplink subframes.

In one embodiment, depending on the frequency granularity of the interference measurement, one or two bits are used to indicate up to two and four interference levels, respectively, for:

- Each physical resource block in the uplink frequency bandwidth;
- Each sub-band or group of at least two physical resource block in the uplink frequency bandwidth;
- The entire uplink bandwidth, i.e., wideband.

The signaling of the uplink inter-cell interference in a subframe (or groups of subframe) over the uplink frequency bandwidth can consist of a bitmap, with each bit or pair of bits corresponding to an interference value for the smallest frequency unit represented by the bitmap. When the smallest frequency unit is one physical resource block, 1 bit or 2 bits can be used in a bitmap to indicate up to 2 or 4 interference values, respectively, for each PRB pair in the uplink system bandwidth. Hence, in this case the interference indicator indicates an inter-cell interference level, and includes 1 or 2 bits indicating up to 2 or 4 possible inter-cell interference levels, respectively. Fewer bits are needed when the smallest resource unit is a sub-band consisting of a group of physical resource blocks, to the case limit where 1 or 2 bits can convey the interference level of the entire uplink bandwidth.

The signaling exchanged between control nodes can have different validity duration. Some can have larger duration targeting at long-term property. While, some others can have shorter duration adapted to the varying traffic in a cell. Any of such signaling could be valid until a new respective signaling is received. The signaling can be transmitted over the X2 interface between two base stations, or a physical channel over air.

Furthermore, as understood by the person skilled in the art, any method according to the present invention may also be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, the present invention also relates to a first and a second control node devices. Mentioned devices comprise suitable means and units for performing any method according to the present invention. Examples of suitable means and units are: input and output units, transmit and receive units, memory means, processing unit, communication units, control unit, etc.

The first network control node device comprises a transmit unit arranged for transmitting at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between a first and a second cell.

The second control node device comprises a receiver unit arranged for receiving at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between a first and a second cell; and a control unit arranged for performing scheduling and/or power control in the downlink or in the uplink and/or changing subframe configuration for one or more subframes based on the interference indicator.

It is noted that the first and second control node devices can be modified, mutatis mutandis, according to the different embodiments of the present method.

Finally, it should be understood that the present invention is not limited to the embodiments described above, but also relates to and incorporates all embodiments within the scope of the appended independent claims.

**Claims**

1. Method for inter-cell interference coordination in a cellular Time Division Duplex, TDD, wireless communication system using radio frames comprising subframes for uplink and downlink transmissions, said system including:

    at least one first network control node arranged for controlling at least one first cell,
    at least one second network control node arranged for controlling at least one second cell;

said method comprising the steps of:

transmitting, by said first network control node, at least one interference indicator being associated with one or more subframes and further relating to at least one of downlink-to-uplink inter-cell interference $I_{DL\text{-}to\text{-}UL}$ and uplink-to-uplink inter-cell interference $I_{UL\text{-}to\text{-}UL}$ between said first and second cells;

receiving, by said second control node, said interference indicator; and

performing, by said second network control node, scheduling and/or power control in the downlink or in the uplink and/or changing subframe configuration for said one or more subframes based on said interference indicator;

wherein said interference indicator is transmitted for one or more subframes with different subframe numbers, and with frequency granularity in a group comprising: one interference indicator per Physical Resource Block, PRB; one interference indicator per sub-band or a group of at least two Physical Resource Blocks, PRBs; or one interference indicator for a whole uplink bandwidth.

2. Method according to claim 1, wherein

said interference indicator at least relates to downlink-to-uplink inter-cell interference $I_{DL\text{-}to\text{-}UL}$; or

wherein said interference indicator at least relates to a sum of downlink-to-uplink $I_{DL\text{-}to\text{-}UL}$ and uplink-to-uplink $I_{UL\text{-}to\text{-}UL}$ inter-cell interference, and said one or more subframes are downlink subframes of said second network control node; the method comprises:

performing, by said second network control node, scheduling and/or power control in the downlink based on said interference indicator.

3. Method according to claim 1, wherein

said interference indicator at least relates to uplink-to-uplink inter-cell interference $I_{UL\text{-}to\text{-}UL}$; or

wherein said interference indicator at least relates to a sum of downlink-to-uplink $I_{DL\text{-}to\text{-}UL}$ and uplink-to-uplink $I_{UL\text{-}to\text{-}UL}$ inter-cell interference, and said one or more sub frames are uplink subframes of said second control node; the method comprises:

performing, by said second network control node, scheduling and/or power control in the uplink based on said interference indicator.

4. Method according to claim 1, wherein said one or more subframes are downlink subframes of said second cell, and said step of receiving involves:

receiving a first interference indicator related to uplink-to-uplink inter-cell interference $I_{UL\text{-}to\text{-}UL}$ and a second interference indicator related to a sum of downlink-to-uplink and uplink-to-uplink inter-cell interference; and said method further comprises the step of:

comparing, by said second control node, said first and second interference indicators so as to determine if scheduling should be performed in the downlink.

5. Method according to claim 1, wherein said one or more subframes are uplink subframes of said second cell, and said step of receiving involves:

receiving a first interference indicator related to downlink-to-uplink inter-cell interference $I_{DL\text{-}to\text{-}UL}$ and a second interference indicator related to a sum of downlink-to-uplink and uplink-to-uplink inter-cell interference; and said method further comprises the step of:

comparing, by said second control node, said first and second interference indicators so as to determine if scheduling should be performed in the uplink.

6. Method according to claim 1, said method further comprising the step of grouping subframes for uplink and downlink transmissions into first, second and third group of subframes:

said first group comprising restricted uplink subframes, i.e. subframes only used for uplink TDD transmissions;

said second group comprising restricted downlink subframes, i.e. subframes only used for downlink TDD transmissions; and

said third group comprising flexible subframes, i.e. subframes used for uplink or downlink TDD transmissions.

7. Method according to claim 6, wherein uplink-to-uplink inter-cell interference $I_{UL\text{-}to\text{-}UL}$ in a:

- restricted uplink subframe $n$ is estimated as an overall uplink inter-cell interference, i.e. $I_{UL\text{-}to\text{-}UL}(n) = I_{UL,ristricted\_UL}(n)$ ; and/or

- restricted downlink subframe $n$ is estimated as zero, i.e. $I_{UL\text{-}to\text{-}UL}(n) = 0$; and/or
- flexible subframe $n$ is estimated as a fraction of an overall uplink inter-cell interference in one or more restricted uplink subframes, i.e. $I_{UL\text{-}to\text{-}UL}(n) = \alpha_{UL}(n)I_{UL,ristricted\_UL}$, where $\alpha_{UL}(n) \in [0,1]$ is a uplink activation factor.

8. Method according to claim 6, wherein downlink-to-uplink inter-cell interference $I_{DL\text{-}to\text{-}UL}$ in a:

- restricted downlink subframe $n$ is estimated as a total overall uplink inter-cell interference, i.e. $I_{DL\text{-}to\text{-}UL}(n) = I_{UL,restricted\_DL}(n)$; and/or
- restricted uplink subframe $n$ is estimated as zero, i.e. $I_{DL\text{-}to\text{-}UL}(n) = 0$; and/or
- flexible subframe $n$ is estimated as a fraction of an overall uplink inter-cell interference in one or more restricted downlink subframes, i.e. $I_{DL\text{-}to\text{-}UL}(n) = \alpha_{DL}(n)I_{UL,ristricted\_DL}$, where $\alpha_{DL}(n) \in [0,1]$ is a downlink activation factor.

9. Method in a first network control node for inter-cell interference coordination in a cellular Time Division Duplex, TDD, wireless communication system using radio frames comprising subframes for uplink and downlink transmissions, said system including:

said first network control node arranged for controlling at least one first cell,
at least one second network control node arranged for controlling at least one second cell;

said method comprising the step of:

transmitting at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between said first and second cells;
wherein said interference indicator is transmitted for one or more subframes with different subframe numbers, and with frequency granularity in a group comprising: one interference indicator per Physical Resource Block, PRB; one interference indicator per sub-band or a group of at least two Physical Resource Blocks, PRBs; or one interference indicator for a whole uplink bandwidth.

10. Method in a second control node for inter-cell interference coordination in a cellular Time Division Duplex, TDD, wireless communication system using radio frames comprising subframes for uplink and downlink transmissions, said system including:

at least one first network control node arranged for controlling at least one first cell,
said second network control node arranged for controlling at least one second cell; said method comprising the steps of:

receiving at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between said first and second cells; and performing scheduling and/or power control in the downlink or in the uplink and/or changing subframe configuration for said one or more subframes based on said interference indicator;
wherein said interference indicator is transmitted for one or more subframes with different subframe numbers, and with frequency granularity in a group comprising: one interference indicator per Physical Resource Block, PRB; one interference indicator per sub-band or a group of at least two Physical Resource Blocks, PRBs; or one interference indicator for a whole uplink bandwidth.

11. Computer program, **characterised in** code means, which when run by processing means causes said processing means to execute said method according to any of claims 1-10.

12. Computer program product comprising a computer readable medium and a computer program according to claim 11, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

13. First network control node device arranged for inter-cell interference coordination in a cellular Time Division Duplex, TDD, wireless communication system using radio frames comprising subframes for uplink and downlink transmissions, said system including:

said first network control node arranged for controlling at least one first cell,
at least one second network control node arranged for controlling at least one second cell;

said first network control node device comprising:

a transmit unit arranged for transmitting at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between said first and second cells;
wherein said interference indicator is transmitted for one or more subframes with different subframe numbers, and with frequency granularity in a group comprising: one interference indicator per Physical Resource Block, PRB; one interference indicator per sub-band or a group of at least two Physical Resource Blocks, PRBs; or one interference indicator for a whole uplink bandwidth.

14. Second control node device arranged for inter-cell interference coordination in a cellular Time Division Duplex, TDD, wireless communication system using radio frames comprising subframes for uplink and downlink transmissions, said system including:

at least one first network control node arranged for controlling at least one first cell,
said second network control node arranged for controlling at least one second cell; said

second control node device comprising:

a receiver unit arranged for receiving at least one interference indicator being associated with one or more subframes and further relating to downlink-to-uplink inter-cell interference $I_{DL\text{-}to\text{-}UL}$ and/or uplink-to-uplink inter-cell interference $I_{UL\text{-}to\text{-}UL}$ between said first and second cells; and
a control unit arranged for performing scheduling and/or power control in the downlink or in the uplink and/or changing subframe configuration for said one or more subframes based on said interference indicator;
wherein said interference indicator is transmitted for one or more subframes with different subframe numbers, and with frequency granularity in a group comprising: one interference indicator per Physical Resource Block, PRB; one interference indicator per sub-band or a group of at least two Physical Resource Blocks, PRBs; or one interference indicator for a whole uplink bandwidth.

15. A cellular Time Division Duplex, TDD, wireless communication system using radio frames comprising subframes for uplink and downlink transmissions comprising at least one of the first network control node according to claim 13, arranged for controlling at least one first cell, and
at least one second network control node according to claim 14, arranged for controlling at least one second cell.

**Patentansprüche**

1. Verfahren zur Interferenzkoordination zwischen Zellen in einem zellularen Zeitmultiplex-Duplex-, TDD-, drahtlosen Kommunikationssystem unter Verwendung von Funkrahmen, die Subrahmen für Uplink- und Downlinkübertragungen umfassen, wobei das System beinhaltet:

mindestens einen ersten Netzwerksteuerknoten, der zum Steuern mindestens einer ersten Zelle angeordnet ist, mindestens einen zweiten Netzwerksteuerknoten, der zum Steuern mindestens einer zweiten Zelle angeordnet ist; wobei das Verfahren die folgenden Schritte umfasst:

Übertragen, durch den ersten Netzwerksteuerknoten, mindestens eines Interferenzindikators, der einem oder mehreren Subrahmen zugeordnet ist und sich ferner auf eine Downlink-zu-Uplink-Interferenz $I_{DL\text{-}to\text{-}UL}$ zwischen Zellen und/oder Uplink-zu-Uplink-Interferenz $I_{UL\text{-}to\text{-}UL}$ zwischen Zellen zwischen den ersten und zweiten Zellen bezieht;
Empfangen des Interferenzindikators durch den zweiten Steuerknoten; und
Durchführen von Zeitplanung und/oder Leistungssteuerung in der Downlink oder in der Uplink und/oder Ändern der Subrahmenkonfiguration für das eine oder die mehreren Subrahmen basierend auf der Interferenzindikation durch den zweiten Netzwerksteuerknoten;

wobei der Interferenzindikator für ein oder mehrere Subrahmen mit unterschiedlichen Subrahmenzahlen und mit Frequenzgranularität in einer Gruppe übertragen wird, die umfasst: einen Interferenzindikator pro physischem Ressourcenblock, PRB; einen Interferenzindikator pro Subband oder eine Gruppe von mindestens zwei physischen Ressourcenblöcken, PRBs; oder einen Interferenzindikator für eine gesamte Uplinkbandbreite.

2. Verfahren nach Anspruch 1, wobei
sich der Interferenzindikator zumindest auf die Downlink-zu-Uplink-Interferenz $I_{DL-to-UL}$ zwischen Zellen bezieht; oder wobei sich der Interferenzindikator zumindest auf eine Summe aus Downlink-zu-Uplink $I_{DL-to-UL}$ - und Uplink-zu-Uplink-Interferenz $I_{UL-to-UL}$ zwischen Zellen bezieht und die einen oder mehreren Subrahmen Downlink-Subrahmens des zweiten Netzwerksteuerknotens sind;
wobei das Verfahren umfasst:
Durchführen einer Zeitplanung und/oder Leistungssteuerung im Downlink durch den zweiten Netzwerksteuerknoten basierend auf dem Interferenzindikator.

3. Verfahren nach Anspruch 1, wobei
der Interferenzindikator sich zumindest auf die Uplink-zu-Uplink-Interferenz $I_{UL-to-UL}$ zwischen Zellen bezieht; oder wobei sich der Interferenzindikator zumindest auf eine Summe aus Downlink-zu-Uplink $I_{DL-to-UL}$ - und Uplink-zu-Uplink-Interferenz $I_{UL-to-UL}$ zwischen Zellen bezieht und die einen oder mehreren Subrahmen Uplink-Subrahmen des zweiten Steuerknotens sind;
wobei das Verfahren umfasst:
Durchführen einer Zeitplanung und/oder Leistungssteuerung im Uplink durch den zweiten Netzwerksteuerknoten basierend auf dem Interferenzindikator.

4. Verfahren nach Anspruch 1, wobei der eine oder die mehreren Subrahmen Downlink-Subrahmen der zweiten Zelle sind, und der Schritt des Empfangens mit einbezieht:
Empfangen eines ersten Interferenzindikators, der sich auf die Uplink-zu-Uplink-Interferenz $I_{UL-to-UL}$ zwischen Zellen bezieht, und eines zweiten Interferenzindikators, der sich auf eine Summe aus Downlink-zu-Uplink und Uplink-zu-Uplink-Interferenz zwischen Zellen bezieht; und das Verfahren ferner den folgenden Schritt umfasst:
Vergleichen der ersten und zweiten Interferenzindikatoren durch den zweiten Steuerknoten, um zu bestimmen, ob eine Zeitplanung im Downlink durchgeführt werden soll.

5. Verfahren nach Anspruch 1, wobei der eine oder die mehreren Subrahmen Uplink-Subrahmen der zweiten Zelle sind, und der Schritt des Empfangens mit einbezieht:
Empfangen eines ersten Interferenzindikators, der sich auf die Downlink-zu-Uplink-Interferenz $I_{DL-to-UL}$ zwischen Zellen bezieht, und eines zweiten Interferenzindikators, der sich auf eine Summe aus Downlink-zu-Uplink und Uplink-zu-Uplink-Interferenz zwischen Zellen bezieht; und das Verfahren ferner den folgenden Schritt umfasst:
Vergleichen der ersten und zweiten Interferenzindikatoren durch den zweiten Steuerknoten, um zu bestimmen, ob eine Zeitplanung im Uplink durchgeführt werden soll.

6. Verfahren nach Anspruch 1, wobei das Verfahren ferner den Schritt des Gruppierens von Subrahmen für Uplink- und Downlinkübertragungen in eine erste, zweite und dritte Gruppe von Subrahmen umfasst:

    wobei die erste Gruppe eingeschränkte Uplink-Subrahmen umfasst, d.h. Subrahmen, die nur für Uplink-TDD-Übertragungen verwendet werden;
    wobei die zweite Gruppe eingeschränkte Downlink-Subrahmen umfasst, d.h. Subrahmen, die nur für Downlink-TDD-Übertragungen verwendet werden; und
    wobei die dritte Gruppe flexible Subrahmen umfasst, d.h. Subrahmen, die für Uplink- oder Downlink-TDD-Übertragungen verwendet werden.

7. Verfahren nach Anspruch 6, wobei Uplink-zu-Uplink-Interferenz $I_{UL-to-UL}$ zwischen Zellen in einem:

    - eingeschränkter Uplink-Subrahmen n als allgemeine Uplink-Interferenz zwischen Zellen geschätzt wird, d.h. $I_{UL-to-UL}(n) = I_{UL,restricted\_UL}(n)$; und/oder
    - eingeschränkter Downlink-Subrahmen n als Null geschätzt wird, d.h. $I_{UL-to-UL}(n) = 0$; und/oder
    - flexibler Subrahmen n als Bruchteil einer allgemeinen Uplink-Interferenz zwischen Zellen in einem oder mehreren eingeschränkten Uplink-Subrahmen geschätzt wird, d.h. $I_{UL-to-UL}(n) = \alpha_{UL}(n)I_{UL,restricted\_UL}$, wobei $\alpha_{UL}(n) \in [0,1]$ ein Uplink-Aktivierungsfaktor ist.

8. Verfahren nach Anspruch 6, wobei Downlink-zu-Uplink-Interferenz $I_{DL-to-UL}$ zwischen Zellen in einem:

- eingeschränkten Downlink-Subrahmen n als totale allgemeine Uplink-Interferenz zwischen Zellen geschätzt wird, d.h. $I_{DL-to-UL}(n) = I_{UL,restricted\_DL}(n)$, und/oder

- eingeschränkten Uplink-Subrahmen n als Null geschätzt wird, d.h. $I_{DL-to-UL}(n) = 0$; und/oder

- flexiblen Subrahmen n als Bruchteil einer allgemeinen Uplink-Interferenz zwischen Zellen in einem oder mehreren eingeschränkten Downlink-Subrahmen geschätzt wird, d.h. $I_{DL-to-UL}(n) = \alpha_{DL}(n)I_{UL,restricted\_DL}$, wobei $\alpha_{DL}(n) \in [0,1]$ ein Downlink-Aktivierungsfaktor ist.

9. Verfahren in einem ersten Netzwerksteuerknoten zur Interferenzkoordination zwischen Zellen in einem zellularen Zeitmultiplex-Duplex-, TDD-, drahtlosen Kommunikationssystem unter Verwendung von Funkrahmen, die Subrahmen für Uplink- und Downlinkübertragungen umfassen, wobei das System Folgendes beinhaltet:

den ersten Netzwerksteuerknoten, der zum Steuern mindestens einer ersten Zelle angeordnet ist, mindestens einen zweiten Netzwerksteuerknoten, der zum Steuern mindestens einer zweiten Zelle angeordnet ist; wobei das Verfahren den folgenden Schritt umfasst:

Übertragen mindestens eines Interferenzindikators, der einem oder mehreren Unterrahmen zugeordnet ist und sich ferner auf die Downlink-zu-Uplink-Interferenz $I_{UL-to-UL}$ zwischen Zellen und/oder Uplink-zu-Uplink-Interferenz $I_{UL-to-UL}$ zwischen Zellen zwischen der ersten und der zweiten Zelle bezieht; wobei der Interferenzindikator für ein oder mehrere Subrahmen mit unterschiedlichen Subrahmenzahlen und mit Frequenzgranularität in einer Gruppe übertragen wird, die umfasst: einen Interferenzindikator pro physischem Ressourcenblock, PRB; einen Interferenzindikator pro Subband oder eine Gruppe von mindestens zwei physischen Ressourcenblöcken, PRBs; oder einen Interferenzindikator für eine gesamte Uplinkbandbreite.

10. Verfahren in einem zweiten Steuerknoten zur Interferenzkoordination zwischen Zellen in einem zellularen Zeitmultiplex-Duplex-, TDD-, drahtlosen Kommunikationssystem unter Verwendung von Funkrahmen, die Subrahmen für Uplink- und Downlinkübertragungen umfassen, wobei das System beinhaltet:

mindestens einen ersten Netzwerksteuerknoten, der zum Steuern mindestens einer ersten Zelle angeordnet ist, den zweiten Netzwerksteuerknoten, der zum Steuern mindestens einer zweiten Zelle angeordnet ist; wobei das Verfahren die folgenden Schritte umfasst:

Empfangen mindestens eines Interferenzindikators, der einem oder mehreren Subrahmen zugeordnet ist und sich ferner auf die Downlink-zu-Uplink-Interferenz $I_{DL-to-UL}$ zwischen Zellen und/oder Uplink-zu-Uplink-Interferenz $I_{UL-to-UL}$ zwischen Zellen zwischen der ersten und der zweiten Zelle bezieht; und Durchführen einer Zeitplanung und/oder Leistungssteuerung im Downlink oder im Uplink und/oder Ändern der Subrahmenkonfiguration für das eine oder die mehreren Subrahmen basierend auf dem Interferenzindikator;

wobei der Interferenzindikator für ein oder mehrere Subrahmen mit unterschiedlichen Subrahmenzahlen und mit Frequenzgranularität in einer Gruppe übertragen wird, die umfasst:
einen Interferenzindikator pro physischem Ressourcenblock, PRB; einen Interferenzindikator pro Subband oder eine Gruppe von mindestens zwei physischen Ressourcenblöcken, PRBs; oder einen Interferenzindikator für eine gesamte Uplinkbandbreite.

11. Computerprogramm, **gekennzeichnet durch** eine Codeeinrichtung, die bei Ausführung durch eine Verarbeitungseinrichtung bewirkt, dass die Verarbeitungseinrichtung das Verfahren nach einem der Ansprüche 1-10 ausführt.

12. Computerprogrammprodukt, umfassend ein computerlesbares Medium und ein Computerprogramm nach Anspruch 11, wobei das Computerprogramm in dem computerlesbaren Medium enthalten ist und einen oder mehrere Bestandteile aus der folgenden Gruppe umfasst: ROM (Read-Only Memory), PROM (Programmable ROM), EPROM (Erasable PROM), Flash-Speicher, EEPROM (Electrically EPROM) und Festplatte.

13. Erste Netzwerksteuerknotenvorrichtung, die zur Interferenzkoordination zwischen Zellen in einem zellularen Zeitmultiplex-Duplex-, TDD-, drahtlosen Kommunikationssystem unter Verwendung von Funkrahmen, die Subrahmen für Uplink- und Downlinkübertragungen umfassen, angeordnet ist, wobei das System beinhaltet:

den ersten Netzwerksteuerknoten, der zum Steuern mindestens einer ersten Zelle angeordnet ist, mindestens einen zweiten Netzwerksteuerknoten, der zum Steuern mindestens einer zweiten Zelle angeordnet ist; wobei die erste Netzwerksteuerknotenvorrichtung umfasst:

eine Übertragungseinheit, die zum Übertragen mindestens eines Interferenzindikators angeordnet ist, der einem oder mehreren Subrahmen zugeordnet ist und sich ferner auf die Downlink-zu-Uplink-Interferenz $I_{DL-to-UL}$ zwischen Zellen und/oder die Uplink-zu-Uplink-Interferenz $I_{UL-to-UL}$ zwischen Zellen zwischen der ersten und der zweiten Zelle bezieht;

wobei der Interferenzindikator für ein oder mehrere Subrahmen mit unterschiedlichen Subrahmenzahlen und mit Frequenzgranularität in einer Gruppe übertragen wird, die umfasst:

einen Interferenzindikator pro physischem Ressourcenblock, PRB; einen Interferenzindikator pro Subband oder eine Gruppe von mindestens zwei physischen Ressourcenblöcken, PRBs; oder einen Interferenzindikator für eine gesamte Uplinkbandbreite.

14. Zweite Steuerknotenvorrichtung, die zur Interferenzkoordination zwischen Zellen in einem zellularen Zeitmultiplex-Duplex-, TDD-, drahtlosen Kommunikationssystem unter Verwendung von Funkrahmen angeordnet ist, die Subrahmen für Uplink- und Downlinkübertragungen umfassen, wobei das System beinhaltet:

mindestens einen ersten Netzwerksteuerknoten, der zum Steuern mindestens einer ersten Zelle angeordnet ist, den zweiten Netzwerksteuerknoten, der zum Steuern mindestens einer zweiten Zelle angeordnet ist; wobei die zweite Steuerknotenvorrichtung umfasst:

eine Empfängereinheit, die zum Empfangen mindestens eines Interferenzindikators angeordnet ist, der einem oder mehreren Subrahmen zugeordnet ist und sich ferner auf die Downlink-zu-Uplink-Interferenz $I_{DL-to-UL}$ zwischen Zellen und/oder die Uplink-zu-Uplink-Interferenz $I_{UL-to-UL}$ zwischen Zellen zwischen der ersten und der zweiten Zelle bezieht; und
eine Steuereinheit, die zum Durchführen einer Zeitplanung und/oder Leistungssteuerung im Downlink oder im Uplink und/oder zum Ändern der Subrahmenkonfiguration für das eine oder die mehreren Subrahmen basierend auf dem Interferenzindikator angeordnet ist;

wobei der Interferenzindikator für ein oder mehrere Subrahmen mit unterschiedlichen Subrahmenzahlen und mit Frequenzgranularität in einer Gruppe übertragen wird, die umfasst:
einen Interferenzindikator pro physischem Ressourcenblock, PRB; einen Interferenzindikator pro Subband oder eine Gruppe von mindestens zwei physischen Ressourcenblöcken, PRBs; oder einen Interferenzindikator für eine gesamte Uplinkbandbreite.

15. Zellulares Zeitmultiplex-Duplex-, TDD-, drahtloses Kommunikationssystem unter Verwendung von Funkrahmen, die Subrahmen für Uplink- und Downlinkübertragungen umfassen, die mindestens einen der ersten Netzwerksteuerknoten nach Anspruch 13 umfassen, die zum Steuern mindestens einer ersten Zelle angeordnet sind, und mindestens einen zweiten Netzwerksteuerknoten nach Anspruch 14, der zum Steuern mindestens einer zweiten Zelle angeordnet ist.

**Revendications**

1. Procédé destiné à la coordination du brouillage intercellulaire dans un système de communication sans fil à Duplexage par Répartition Temporelle, TDD, cellulaire utilisant des trames radio comprenant des sous-trames destinées à des transmissions de liaison montante et de liaison descendante, ledit système comportant :

au moins un premier nœud de commande de réseau conçu pour commander au moins une première cellule, au moins un deuxième nœud de commande de réseau conçu pour commander au moins une deuxième cellule ; ledit procédé comprenant les étapes suivantes :

la transmission, par ledit premier nœud de commande de réseau, d'au moins un indicateur de brouillage qui est associé à une ou plusieurs sous-trames et concernant en outre au moins l'un d'un brouillage intercellulaire de liaison descendante à liaison montante $I_{DL-to-UL}$ et d'un brouillage intercellulaire de liaison montante à liaison montante $I_{UL-to-UL}$ entre lesdites première et deuxième cellules ;
la réception, par ledit deuxième nœud de commande, dudit indicateur de brouillage ; et
l'exécution, par ledit deuxième nœud de commande de réseau, d'une planification et/ou d'une commande de puissance dans la liaison descendante ou dans la liaison montante et/ou d'une modification de la configuration des sous-trames pour lesdites une ou plusieurs sous-trames sur la base dudit indicateur de brouillage ;

dans lequel ledit indicateur de brouillage est transmis pour une ou plusieurs sous-trames avec différents nombres de sous-trames, et avec une granularité de fréquence appartenant à un groupe comprenant : un indicateur de brouillage par Bloc de Ressources Physiques, PRB ; un indicateur de brouillage par sous-bande ou pour un groupe d'au moins deux Blocs de Ressources Physiques, PRB ; ou un indicateur de brouillage pour la totalité d'une largeur de bande de liaison montante.

2. Procédé selon la revendication 1, dans lequel ledit indicateur de brouillage concerne au moins un brouillage intercellulaire de liaison descendante à liaison montante $I_{DL\text{-}to\text{-}UL}$ ; ou

dans lequel ledit indicateur de brouillage concerne au moins une somme de brouillages intercellulaires de liaison descendante à liaison montante $I_{DL\text{-}to\text{-}UL}$ et de liaison montante à liaison montante $I_{UL\text{-}to\text{-}UL}$, et lesdites une ou plusieurs sous-trames sont des sous-trames de liaison descendante dudit deuxième nœud de commande de réseau ;

le procédé comprenant :

l'exécution, par ledit deuxième nœud de commande de réseau, d'une planification et/ou d'une commande de puissance dans la liaison descendante sur la base dudit indicateur de brouillage.

3. Procédé selon la revendication 1, dans lequel

ledit indicateur de brouillage concerne au moins un brouillage intercellulaire de liaison montante à liaison montante $I_{UL\text{-}to\text{-}UL}$ ; ou

dans lequel ledit indicateur de brouillage concerne au moins une somme de brouillages intercellulaires de liaison descendante à liaison montante $I_{DL\text{-}to\text{-}UL}$ et de liaison montante à liaison montante $I_{UL\text{-}to\text{-}UL}$, et lesdites une ou plusieurs sous-trames sont des sous-trames de liaison montante dudit deuxième nœud de commande ;

le procédé comprenant :

l'exécution, par ledit deuxième nœud de commande de réseau, d'une planification et/ou d'une commande de puissance dans la liaison montante sur la base dudit indicateur de brouillage.

4. Procédé selon la revendication 1, dans lequel lesdites une ou plusieurs sous-trames sont des sous-trames de liaison descendante de ladite deuxième cellule, et ladite étape de réception comprend :

la réception d'un premier indicateur de brouillage concernant un brouillage intercellulaire de liaison montante à liaison montante $I_{UL\text{-}to\text{-}UL}$ et d'un deuxième indicateur de brouillage concernant une somme de brouillages intercellulaires de liaison descendante à liaison montante et de liaison montante à liaison montante ; et

ledit procédé comprend en outre l'étape suivante :

la comparaison, par ledit deuxième nœud de commande, desdits premier et deuxième indicateurs de brouillage de manière à déterminer si une planification doit être effectuée dans la liaison descendante.

5. Procédé selon la revendication 1, dans lequel lesdites une ou plusieurs sous-trames sont des sous-trames de liaison montante de ladite deuxième cellule, et ladite étape de réception comprend :

la réception d'un premier indicateur de brouillage concernant un brouillage intercellulaire de liaison descendante à liaison montante $I_{DL\text{-}to\text{-}UL}$ et un deuxième indicateur de brouillage concernant une somme de brouillages intercellulaires de liaison descendante à liaison montante et de liaison montante à liaison montante ; et ledit procédé comprend en outre l'étape suivante :

la comparaison, par ledit deuxième nœud de commande, desdits premier et deuxième indicateurs de brouillage de manière à déterminer si une planification doit être effectuée dans la liaison montante.

6. Procédé selon la revendication 1, ledit procédé comprenant en outre l'étape de regroupement de sous-trames destinées à des transmissions de liaison montante et de liaison descendante en des premier, deuxième et troisième groupes de sous-trames :

ledit premier groupe comprenant des sous-trames de liaison montante limitées, c'est-à-dire des sous-trames utilisées uniquement pour des transmissions TDD de liaison montante ;

ledit deuxième groupe comprenant des sous-trames de liaison descendante limitées, c'est-à-dire des sous-trames utilisées uniquement pour des transmissions TDD de liaison descendante ; et

ledit troisième groupe comprenant des sous-trames flexibles, c'est-à-dire des sous-trames utilisées pour des transmissions TDD de liaison montante ou de liaison descendante.

7. Procédé selon la revendication 6, dans lequel un brouillage intercellulaire de liaison montante à liaison montante $I_{UL\text{-}to\text{-}UL}$ :

- dans une sous-trame de liaison montante limitée *n*, est estimé comme étant un brouillage intercellulaire de liaison montante global, c'est-à-dire $I_{UL\text{-}to\text{-}UL}(n) = I_{UL,restricted\_UL}(n)$ ; et/ou
- dans une sous-trame de liaison descendante limitée n, est estimé comme étant égal à zéro, c'est-à-dire $I_{UL\text{-}to\text{-}UL}(n) = 0$ ; et/ou
- dans une sous-trame flexible *n*, est estimé comme étant une fraction d'un brouillage intercellulaire de liaison montante global dans une ou plusieurs sous-trames de liaison montante limitées, c'est-à-dire $I_{UL\text{-}to\text{-}UL}(n) = \alpha_{UL}(n)I_{UL,restricted\_UL}$, où $\alpha_{UL}(n) \in [0, 1]$ est un facteur d'activation de liaison montante.

8. Procédé selon la revendication 6, dans lequel un brouillage intercellulaire de liaison descendante à liaison montante $I_{DL\text{-}to\text{-}UL}$ :

- dans une sous-trame de liaison descendante limitée *n*, est estimé comme étant un brouillage intercellulaire de liaison montante global total, c'est-à-dire $I_{DL\text{-}to\text{-}UL}(n) = I_{UL,restricted\_DL}(n)$ ; et/ou
- dans une sous-trame de liaison montante limitée *n*, est estimé comme étant égal à zéro, c'est-à-dire $I_{DL\text{-}to\text{-}UL}(n) = 0$ ; et/ou
- dans une sous-trame flexible *n*, est estimé comme étant une fraction d'un brouillage intercellulaire de liaison montante global dans une ou plusieurs sous-trames de liaison descendante limitées, c'est-à-dire $I_{DL\text{-}to\text{-}UL}(n) = \alpha_{DL}(n)I_{UL,restricted\_DL}$, où $\alpha_{DL}(n) \in [0, 1]$ est un facteur d'activation de liaison descendante.

9. Procédé, dans un premier nœud de commande de réseau, destiné à la coordination du brouillage intercellulaire dans un système de communication sans fil à Duplexage par Répartition Temporelle, TDD, cellulaire utilisant des trames radio comprenant des sous-trames destinées à des transmissions de liaison montante et de liaison descendante, ledit système comportant :

ledit premier nœud de commande de réseau conçu pour commander au moins une première cellule, au moins un deuxième nœud de commande de réseau conçu pour commander au moins une deuxième cellule ; ledit procédé comprenant l'étape suivante :

la transmission d'au moins un indicateur de brouillage qui est associé à une ou plusieurs sous-trames et concernant en outre un brouillage intercellulaire de liaison descendante à liaison montante $I_{DL\text{-}to\text{-}UL}$ et/ou un brouillage intercellulaire de liaison montante à liaison montante $I_{UL\text{-}to\text{-}UL}$ entre lesdites première et deuxième cellules ; dans lequel ledit indicateur de brouillage est transmis pour une ou plusieurs sous-trames avec différents nombres de sous-trames, et avec une granularité de fréquence appartenant à un groupe comprenant : un indicateur de brouillage par Bloc de Ressources Physiques, PRB ; un indicateur de brouillage par sous-bande ou pour un groupe d'au moins deux Blocs de Ressources Physiques, PRB ; ou un indicateur de brouillage pour la totalité d'une largeur de bande de liaison montante.

10. Procédé, dans un deuxième nœud de commande, destiné à la coordination du brouillage intercellulaire dans un système de communication sans fil à Duplexage par Répartition Temporelle, TDD, cellulaire utilisant des trames radio comprenant des sous-trames destinées à des transmissions de liaison montante et de liaison descendante, ledit système comportant :

au moins un premier nœud de commande de réseau conçu pour commander au moins une première cellule, ledit deuxième nœud de commande de réseau conçu pour commander au moins une deuxième cellule ; ledit procédé comprenant les étapes suivantes :

la réception d'au moins un indicateur de brouillage qui est associé à une ou plusieurs sous-trames et concernant en outre un brouillage intercellulaire de liaison descendante à liaison montante $I_{DL\text{-}to\text{-}UL}$ et/ou un brouillage intercellulaire de liaison montante à liaison montante $I_{UL\text{-}to\text{-}UL}$ entre lesdites première et deuxième cellules ; et l'exécution d'une planification et/ou d'une commande de puissance dans la liaison descendante ou dans la liaison montante et/ou d'une modification de la configuration des sous-trames pour lesdites une ou plusieurs sous-trames sur la base dudit indicateur de brouillage ; dans lequel ledit indicateur de brouillage est transmis pour une ou plusieurs sous-trames avec différents nombres de sous-trames, et avec une granularité de fréquence appartenant à un groupe comprenant : un indicateur de brouillage par Bloc de Ressources Physiques, PRB ; un indicateur de brouillage par sous-bande ou pour un groupe d'au moins deux Blocs de Ressources Physiques, PRB ; ou un indicateur de brouillage pour la totalité d'une largeur de bande de liaison montante.

11. Programme d'ordinateur, **caractérisé par** un moyen à code, qui, lorsqu'il est exécuté par un moyen de traitement, amène ledit moyen de traitement à mettre en œuvre ledit procédé selon l'une quelconque des revendications 1-10.

12. Produit de programme d'ordinateur comprenant un support lisible par ordinateur et un programme d'ordinateur selon la revendication 11, dans lequel ledit programme d'ordinateur est contenu dans le support lisible par ordinateur, et comprend un ou plusieurs des éléments du groupe : une ROM (Mémoire Morte), une PROM (ROM Programmable), une EPROM (PROM Effaçable), une mémoire Flash, une EEPROM (PROM Effaçable Électriquement) et un lecteur de disque dur.

13. Premier dispositif de nœud de commande de réseau conçu pour la coordination du brouillage intercellulaire dans un système de communication sans fil à Duplexage par Répartition Temporelle, TDD, cellulaire utilisant des trames radio comprenant des sous-trames destinées à des transmissions de liaison montante et de liaison descendante, ledit système comportant :

ledit premier nœud de commande de réseau conçu pour commander au moins une première cellule, au moins un deuxième nœud de commande de réseau conçu pour commander au moins une deuxième cellule ; ledit premier dispositif de nœud de commande de réseau comprenant :

une unité de transmission conçue pour la transmission d'au moins un indicateur de brouillage qui est associé à une ou plusieurs sous-trames et concernant en outre un brouillage intercellulaire de liaison descendante à liaison montante $I_{DL-to-UL}$ et/ou un brouillage intercellulaire de liaison montante à liaison montante $I_{UL-to-UL}$ entre lesdites première et deuxième cellules ; dans lequel ledit indicateur de brouillage est transmis pour une ou plusieurs sous-trames avec différents nombres de sous-trames, et avec une granularité de fréquence appartenant à un groupe comprenant : un indicateur de brouillage par Bloc de Ressources Physiques, PRB ; un indicateur de brouillage par sous-bande ou pour un groupe d'au moins deux Blocs de Ressources Physiques, PRB ; ou un indicateur de brouillage pour la totalité d'une largeur de bande de liaison montante.

14. Deuxième dispositif de nœud de commande conçu pour la coordination du brouillage intercellulaire dans un système de communication sans fil à Duplexage par Répartition Temporelle, TDD, cellulaire utilisant des trames radio comprenant des sous-trames destinées à des transmissions de liaison montante et de liaison descendante, ledit système comportant :

au moins un premier nœud de commande de réseau conçu pour commander au moins une première cellule, ledit deuxième nœud de commande de réseau conçu pour commander au moins une deuxième cellule ; ledit deuxième dispositif de nœud de commande comprenant :

une unité de réception conçue pour recevoir au moins un indicateur de brouillage qui est associé à une ou plusieurs sous-trames et concernant en outre un brouillage intercellulaire de liaison descendante à liaison montante $I_{DL-to-UL}$ et/ou un brouillage intercellulaire de liaison montante à liaison montante $I_{UL-to-UL}$ entre lesdites première et deuxième cellules ; et une unité de commande conçue pour l'exécution d'une planification et/ou d'une commande de puissance dans la liaison descendante ou dans la liaison montante et/ou d'une modification de la configuration des sous-trames pour lesdites une ou plusieurs sous-trames sur la base dudit indicateur de brouillage ;

dans lequel ledit indicateur de brouillage est transmis pour une ou plusieurs sous-trames avec différents nombres de sous-trames, et avec une granularité de fréquence appartenant à un groupe comprenant : un indicateur de brouillage par Bloc de Ressources Physiques, PRB ; un indicateur de brouillage par sous-bande ou pour un groupe d'au moins deux Blocs de Ressources Physiques, PRB ; ou un indicateur de brouillage pour la totalité d'une largeur de bande de liaison montante.

15. Système de communication sans fil à Duplexage par Répartition Temporelle, TDD, cellulaire utilisant des trames radio comprenant des sous-trames destinées à des transmissions de liaison montante et de liaison descendante, comprenant au moins l'un du premier nœud de commande de réseau selon la revendication 13, conçu pour commander au moins une première cellule, et d'au moins un deuxième nœud de commande de réseau selon la revendication 14, conçu pour commander au moins une deuxième cellule.

Fig. 1

One radio frame, $T_f = 307200\,T_s = 10$ ms

One half-frame, $153600\,T_s = 5$ ms

One slot, $T_{slot} = 15360\,T_s$

$30720\,T_s$

One subframe, $30720\,T_s$

Subframe #0  Subframe #1  Subframe #2  Subframe #3  Subframe #4  Subframe #5  Subframe #6  Subframe #7  Subframe #8  Subframe #9

DwPTS  GP  UpPTS

Fig. 2

EP 2 982 062 B1

a TDD radio frame

| Subframe #0 | Subframe #1 | Subframe #2 | Subframe #3 | Subframe #4 | Subframe #5 | Subframe #6 | Subframe #7 | Subframe #8 | Subframe #9 |

Restricted downlink Subframe

Restricted uplink Subframe

flexible Subframe

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012105766 A2
- US 2012046028 A1